# EUROPEAN PATENT APPLICATION

(11) **EP 4 421 707 A1**
(43) Date of publication of application: **28.08.2024**
(21) Application number: 22897569.4
(22) Date of filing: 03.11.2022
(51) Int. Cl.: G06Q 10/10, G06F 3/04842

(54) **METHOD AND APPARATUS FOR GENERATING PROJECT FLOW, ELECTRONIC DEVICE, AND STORAGE MEDIUM**

(30) Priority: 26.11.2021 CN 202111422126
(71) Applicant: Beijing Zitiao Network Technology Co., Ltd., Beijing 100190 (CN)
(72) Inventor: HONG, Tao, Beijing 100086 (CN); XIONG, Dian, Beijing 100086 (CN); WANG, Chen, Beijing 100086 (CN); SHI, Linxuan, Beijing 100086 (CN)
(74) Representative: Dentons UK and Middle East LLP
(86) International application number: PCT/CN2022/129418
(87) International publication number: WO 2023/093486

(57) **Abstract**

Provided are a method for generating a project flow, an apparatus, an electronic device, and a storage medium. The method includes determining at least one process node corresponding to a target project to be configured and determining node attribute information of the at least one process node; determining a node dependence of the at least one process node; and determining, based on the node dependence and the node attribute information, execution project flow information corresponding to the target project to be configured.

## Description

This application claims priority to Chinese Patent Application No. 202111422126.4 filed with the China National Intellectual Property Administration (CNIPA) on Nov. 26, 2021, the disclosure of which is incorporated herein by reference in its entirety.

### TECHNICAL FIELD

Embodiments of the present disclosure relate to the field of computer technology, for example, a method and an apparatus for generating a project flow, an electronic device, and a storage medium.

### BACKGROUND

When an enterprise develops a product or conducts a business according to market demands and user demands, a relevant team within the enterprise should first establish a corresponding project based on the working content. A project leader needs to sort out and plan the project on the whole and in detail to advance the work in multiple stages of the project.

However, as the scale of the project continues to grow and the complexity of the stages of the project deepens, it becomes increasingly difficult to sort out and plan the project process. Moreover, there is no effective method to integrate the work content of multiple stages of the project. Thus, the efficiency of project promotion is relatively low.

### SUMMARY

Embodiments of the present disclosure provide a method and an apparatus for generating a project flow, an electronic device, and a storage medium, which provide a standard and concise method for sorting out and planning a project and improve the convenience of constructing corresponding project processes based on practical projects.

In a first aspect, embodiments of the present disclosure provide a method for generating a project flow. The method includes determining at least one process node corresponding to a target project to be configured, and determining node attribute information of the at least one process node; determining a node dependence of the at least one process node; and determining, based on the node dependence and the node attribute information, execution project flow information corresponding to the target project to be configured.

In a second aspect, embodiments of the present disclosure further provide an apparatus for generating a project flow. The apparatus includes a process node determination module, a node dependence determination module, and an execution project flow information determination module.

The process node determination module is configured to determine at least one process node corresponding to a target project to be configured and determine node attribute information of the at least one process node.

The node dependence determination module is configured to determine a node dependence of the at least one process node.

The execution project flow information determination module is configured to determine, based on the node dependence and the node attribute information, execution project flow information corresponding to the target project to be configured.

In a third aspect, embodiments of the present disclosure further provide an electronic device. The device includes one or more processors and a storage apparatus.

The storage apparatus is configured to store one or more programs.

When executed by the one or more processors, the one or more programs cause the one or more processors to perform the method for generating a project flow of any one of the embodiments of the present disclosure.

In a fourth aspect, embodiments of the present disclosure also provide a storage medium containing computer-executable instructions that, when executed by a computer processor, implement the method for generating a project flow of any one of the embodiments of the present disclosure.

### BRIEF DESCRIPTION OF DRAWINGS

The same or similar reference numerals throughout the drawings denote the same or similar elements. It should be understood that the drawings are schematic and that the originals and elements are not necessarily drawn to scale.
FIG. 1 is a flowchart of a method for generating a project flow according to an embodiment of the present disclosure;
FIG. 2 is a flowchart of a method for generating a project flow according to another embodiment of the present disclosure;
FIG. 3 is a diagram illustrating a finally generated project flow according to an embodiment of the present disclosure;
FIG. 4 is a template for generating a project flow according to an embodiment of the present disclosure;
FIG. 5 is a flowchart of a method for generating a project flow according to another embodiment of the present disclosure;
FIG. 6 is a node information editing page according to an embodiment of the present disclosure;
FIG. 7 is a node scheduling page according to an embodiment of the present disclosure;
FIG. 8 is a node-associated role selection page according to an embodiment of the present disclosure;
FIG. 9 is a block diagram illustrating the structure of an apparatus for generating a project flow according to an embodiment of the present disclosure;
FIG. 10 is a diagram illustrating the structure of an electronic device according to an embodiment of the present disclosure.

### DETAILED DESCRIPTION

It should be understood that steps described in method embodiments of the present disclosure may be performed in sequence and/or in parallel. Additionally, the method embodiments may include additional steps and/or omit some of the illustrated steps. The scope of the present disclosure is not limited in this respect.

The term "include" and variations thereof used herein refer to "including, but not limited to". The term "based on" refers to "at least partially based on". The term "an embodiment" refers to "at least one embodiment". The term "another embodiment" refers to "at least one another embodiment". The term "some embodiments" refers to "at least some embodiments". Definitions of other terms are given in the description hereinafter.

It should be noted that concepts such as "first" and "second" in the present disclosure are used to distinguish between apparatuses, between modules, or between units and are not intended to limit the order or mutual dependence of the functions performed by these apparatuses, modules, or units.

It should be noted that "one" and "multiple" mentioned in the present disclosure are not limiting but illustrative and should be construed by those skilled in the art as "one or more" unless otherwise specified in the context.

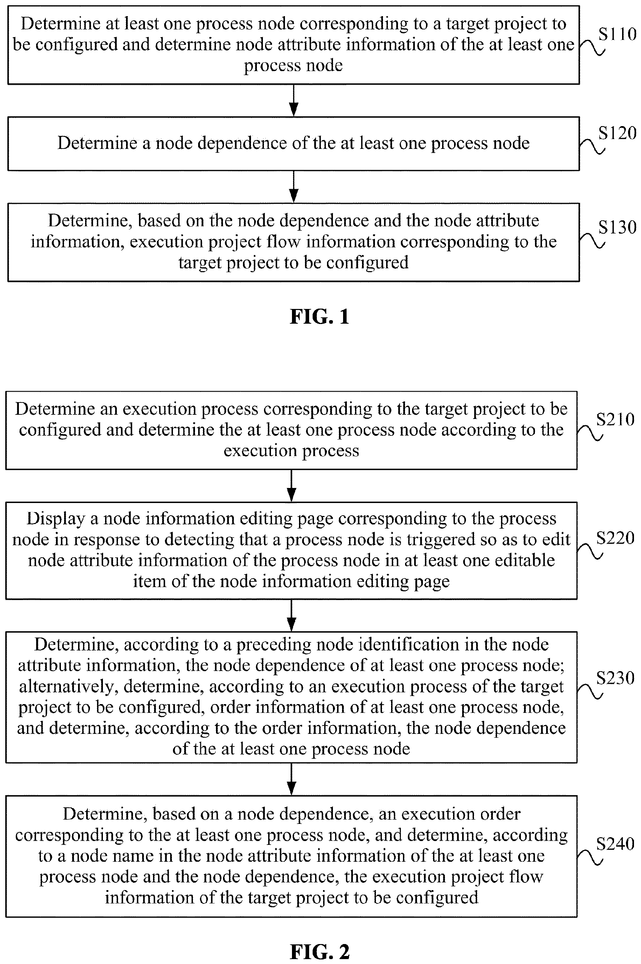

FIG. 1 is a flowchart of a method for generating a project flow according to an embodiment of the present disclosure. This embodiment is applicable to a situation of determining an execution project flow for multiple projects to be configured. The method may be executed by an apparatus for generating a project flow. The apparatus may be implemented in the form of software and/or hardware. The hardware may be an electronic device, such as a mobile terminal, a person computer (PC) terminal, or a server.

Before this technical solution is introduced, the application scenario may be exemplified. This technical solution may be applied in any scenario where a project flow needs to be generated for a project. For example, an enterprise creates a project according to market demands and user demands and wishes to create a visual and digitized project flow for the project. At this time, an execution project flow may be determined based on this technical solution.

As shown in FIG. 1, the method in this embodiment includes the steps described below.

S 110, at least one process node corresponding to a target project to be configured is determined, and node attribute information of the at least one process node is determined.

For a project established by an enterprise for a specific product or business, relevant staff need to construct a corresponding project process for the work content of the project to control multiple links thereof after the project is carried out. For example, the staff first need to define the requirements of the project and practical work content of the project and then sort out and plan the overall project according to the needs of project management. It can be understood that the project is divided into multiple stages, and executors at each stage of the project and subject ideas corresponding to the execution content are determined. Finally, a project process in the form of a document, a flowchart, or other specific form corresponding to the project is obtained in the computer.

Based on this, in this embodiment, if a corresponding execution project needs to be configured for a certain project or product, the project or product may be used as a target project to be configured, for example, a project established to evaluate and develop the product after an enterprise conceives an Internet product based on user demands.

In this embodiment, a process node is a carrier of relevant information of multiple stages of the target project to be configured. One or more process nodes may be provided. The specific number of the process node is determined by practical work content of the project and the project management requirements. Meanwhile, a process node may correspond to either a certain stage in the project or a certain step in a single stage of the project. For example, the process nodes of the target project to be configured include an initiation review node, an evaluation node, a demand benefit analysis node, a development node, a test node, and a release node. The initiation review node, the evaluation node, and the demand benefit analysis node correspond to a start-up stage of the project. The development node and the test node correspond to a development and test stage of the project. The release node corresponds to an online stage of the project.

For multiple process nodes of the target project to be configured object, node attribute information corresponding to these process nodes exists. In this embodiment, the node attribute information may be information that reflects the staff and work content at each stage of the project. For example, the node attribute information of the development node in the above example may include a department that develops the product, a developer, and a time period required for development.

In a practical application process, for the target project to be configured, the process node of the target project to be configured and node attribute information of each process node may be determined via a specific platform or system. Exemplarily, the staff, after determining the target project to be configured, may use a specific control to establish a corresponding process node for each stage or step of the project in the platform or the system used to generate the project flow according to practical work content of the project and project process management requirements. Moreover, the staff may configure corresponding node attribute information for each process node according to the substantive work content of the project.

The preceding examples continue to be used. When the target project to be configured includes the start-up stage, the development and test stage, and the online stage, a project leader may enter a space configuration background in a project flow generation platform and determine the initiation review node, the evaluation node, the demand benefit analysis node, and the like that are suitable for the project from multiple pre-deployed nodes by clicking, dragging, and other operations in the background as the process nodes that represent the preceding stages. The node attribute information of each process node may be obtained by selecting or editing a corresponding department in charge, a developer, and a time period required for development for each process node according to practical work content of the project and the project management requirements.

S 120, a node dependence of the at least one process node is determined.

In this embodiment, a node dependence of the at least one process node needs to be determined after the at least one process node and the node attribute information of each process node for the target project to be configured are determined. The node dependence is also referred to as a logical relationship. In project management, when only one process node is provided, the node dependence of the node is obtained by determining start information and end information of the node; when multiple process nodes are provided, the node dependence indicates a relationship where a change of one of two nodes affects the other node of the two nodes. The node dependence generally includes a mandatory node dependence (an inherent node dependence between nodes), a freely processable node dependence (a node dependence determined by practical work content of the project and project management requirements), and an external node dependence (a node dependence between a node and an other external factor). Those skilled in the art should understand that node dependences between process nodes may at least reflect the execution order of the work in multiple stages of the project.

It should be noted that when the project flow of the target project to be configured is generated via a specific platform or system, many methods may be used to determine node dependences of the process nodes. For example, a user may connect the process nodes by clicking, dragging, or other operations. It can be understood that the connection lines between nodes may have directivity. A corresponding identification may also be configured for each process node. An association relationship between nodes is determined by editing the association relationship between the identifications on a configuration interface. Those skilled in the art should understand that methods of determining dependences of process nodes may be selected according to the platform or the system selected by the user, which is not specifically limited in the embodiment of the present disclosure.

The preceding examples continue to be used. On the basis of the platform or the system that generates the project flow, when it is determined that process nodes of the target project to be configured include the initiation review node, the evaluation node, the demand benefit analysis node, the development node, the test node, and the release node, the project leader may draw connection lines with arrows between nodes by dragging, thereby determining that the execution order of the work in multiple stages of the project is to first initiate review of the project, then evaluate the project, then analyze the demand benefit of the project, then develop a product related to the project, test the producs, and finally release the product online.

S130, based on the node dependence and the node attribute information, execution project flow information corresponding to the target project to be configured is determined.

In this embodiment, after the node attribute information of the process nodes is determined for the target project to be configured, a connection between the node attribute information of the nodes may also be established based on the determined node dependence between the process nodes, and then execution project flow of the project is obtained.

For example, based on the determined node dependence and node attribute information, execution project flow information of the target project to be configured may be determined. In this embodiment, the execution project flow may be understood as the project flow of the target project to be configured, that is, the execution order of the practical work in multiple stages of the project. The execution project flow information includes node attribute information of at least one process node, association relationship between executive personnel of the nodes, and association relationship of the practical work content in multiple stages. Finally, the determined execution project flow information is displayed in a particular platform or system in the form of a document, a flowchart, or other forms.

The preceding examples continue to be used. When the node dependences of the initiation review node, the evaluation node, the demand benefit analysis node, the development node, the test node, and the release node of the target project to be configured are determined, and the department in charge, executive personnel, and task execution cycle of each node are determined, a handover task of the department in charge of each node of the project, a task file that need to be delivered by the executive personnel of each node, and a time period of the task execution cycle of each node in the project on a whole are determined via the platform or the system for generating the project flow. The flowchart of the project is displayed on a specific page of the platform or system. The project leader, by clicking a node in the flowchart, may view the node attribute information of the node and the node dependences between the node and an other node.

The execution project flow information of the target project to be configured is determined so that work multiple tasks of nodes of the project are automatically sorted out and planned in a standardized form on the whole and in detail. After the project is carried out, the project leader may monitor the progress and completion of work in each stage of the project according to the obtained project processes, thereby achieving efficient management of the project. For example, in a specific platform or system, the project leader may browse a dynamic project flowchart on a specific page to know the progress and completion of the project based on different pieces of state information of nodes in the chart. Meanwhile, the execution project flow information includes the node dependence of at least one process node of the project. Multiple teams responsible for project evaluation, research and development, and online release may determine respective work content and handover tasks via the node dependence. In this manner, integration of the multiple departments in the teams and integration of executive personnel in multiple stages of the project can be achieved, which facilitates the efficient advancement of the project.

It should be noted that after the execution project flow information is obtained based on the node attribute information and the node dependence of at least one process node, the obtained execution project flow information and the project flowchart may be stored in the template repository of the platform or the system in the form of a template, and a corresponding identification is marked for the template according to the project description information. When execution project flow information and a project flowchart needs to be determined for an other project that have similar work content and project management requirements as the target project to be configured, selecting the template saved this time in the template repository may directly determine execution project flow information and the project flowchart of the other project. Those skilled in the art should understand that in the platform or system for generating a project flow, a user may also rationally modify some configuration information (such as the node attribute information of each process node and the node dependences between the nodes) in the template according to a practical situation of the other project, which is not repeated herein by embodiments of the present disclosure.

In the technical solution of this embodiment, the at least one process node corresponding to a target project to be configured is determined and the node attribute information of each process node to clarify the specific work content in each process of the project is determined. The node dependence of the at least one process node is determined and, based on a node dependence and node attribute information, the execution project flow information corresponding to the target project to be configured is determined, thereby providing a standard and concise method for sorting out and planning the project and improving the convenience of constructing a corresponding project process based on a practical project. Moreover, the obtained clear and digitized project process facilitates staff to monitor and manage the project on the whole and the work in multiple stages, thereby facilitating efficient advancement of the project.

FIG. 2 is a flowchart of a method for generating a project flow according to another embodiment of the present disclosure. On the basis of the preceding embodiment, a process node is determined according to a project execution process, and when it is detected that a process node is triggered, a node information editing page is displayed so that a user may customize node attribute information with a higher degree of freedom. A node dependence between nodes is determined according to a preceding node identification, or a node dependence between nodes is determined based on the project execution process, thereby achieving logical sorting of the project execution process. An execution order of the process nodes is determined based on the node dependence, and execution project flow information is generated, thereby facilitating efficient advancement of the project. For example embodiments thereof, reference may be made to the technical solution of this embodiment. Technical terms identical to or corresponding to the preceding embodiment are not repeated herein.

As shown in FIG. 2, the method includes the steps described below.

S210, an execution process corresponding to the target project to be configured is determined, and at least one process node is determined according to the execution process.

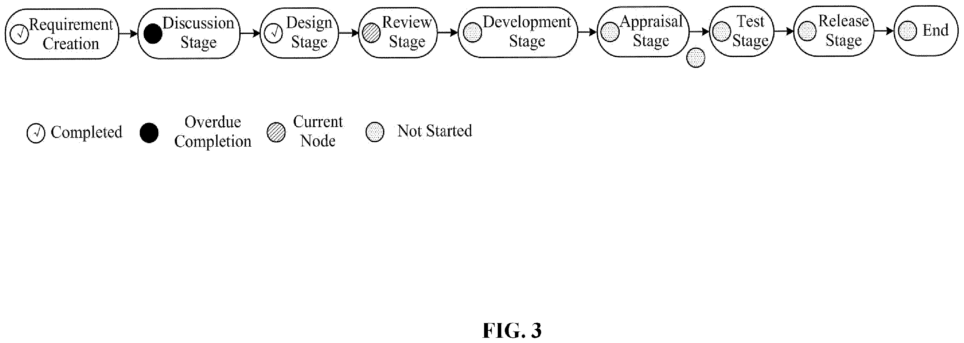

The execution process corresponding to the target project to be configured includes multiple stages from start to end of the project. It can be understood that the execution project, based on practical work content of the project, is obtained by dividing and summarizing the work content according to the project management requirements. To obtain execution project flow information of the project, in a specific platform or system, corresponding process nodes may be selected or created for multiple stages in the execution process, and the determined at least one process node corresponds to the execution process. The preceding process is described in detail below in connection with FIG. 3.

Referring to FIG. 3, when a target project to be configured is determined, a space configuration option in a platform or system for generating a project flow may be selected, and then a task of configuring a project flow for the project is created on a page corresponding to the space configuration. Based on practical work content of the project and the project management requirements, it can be determined that the project execution process includes stages such as project review, research and development, and release. Therefore, in a task processing page for configuring a project flow, a project leader may select or create requirement creation, discussion alignment, product design, in-line review, user experience (UX) design, technical review, research and development completion, a gray-scale release, Release Note filling, full release, and end as the process nodes. It can be understood that the preceding nodes collectively reflect the project execution process and are a division and summary of work content in multiple stages.

For example, a process node includes a master process node and a slave process node. For process nodes corresponding to the execution process, the master process node and the slave process node are a relative concept. Configuring the master-slave concept for the process nodes may at least reflect an execution order of the process nodes and the relationship between the nodes.

Based on this, in the process of determining at least one process node according to the execution process, at least one master process node is determined according to the execution process. For each master process node, when it is detected that a current master process node is triggered, a slave process node corresponding to a current master process node is added; when it is detected that the slave process node is triggered, the slave process node is used as the current master process node. The process is described below based on FIG. 3.

Referring to FIG. 3, for the requirement creation node and the discussion alignment node in the execution process, the project team needs to first specify the requirement information of the project, and then departments discuss to determine the practical work content of the project. Therefore, the requirement creation node corresponding to the first stage of the project may be used as a master process node, and the discussion alignment node in the latter stage may be used as a slave process node. After adding the requirement creation node on a space configuration related page according to the execution process, the project leader may perform a click operation on the node. After detecting this operation, the platform or system may automatically add the discussion alignment node corresponding to the next stage of the project to the node.

Similarly, for the discussion alignment node and the product design node, when it is detected that the alignment node is triggered, the platform or system may take the alignment node as the current master process node and automatically add the product design node corresponding to the next stage of the project. Moreover, it should be noted that for a same master process node, multiple levels of slave process nodes may eixst, and multiple slave process nodes may also exist. The execution process of the project in FIG. 3 is used as an example. When the requirement creation node is used as a master process node, the discussion alignment node and the product design node corresponding to multiple stages of the project after the requirement creation node are multi-level slave process nodes of the requirement creation node. Moreover, when the research and development completion node is used as a master process node, the gray-scale release node and the Release Note filling node are slave process nodes of the research and development completion node. It can be understood that when multiple slave process nodes are at the same level, work tasks corresponding to the nodes may be executed concurrently.

It should be noted that since the execution process and the process node of the target project to be configured are generated by a specific platform or system, multiple templates corresponding to various projects and having a certain universality may be pre-edited in the platform or system before the process node is determined. Based on this, a process node may be determined for the execution process of the project directly via a template.

For example, when it is detected that a template creation control on a target page is triggered, a configuration page for creating a template is popped up. The configuration page includes a template type control and a control for whether to reuse an existing template. A to-be-used template corresponding to the target project to be configured is determined based on the triggering operation on the configuration page to determine at least one process node corresponding to the target project to be configured based on the to-be-used template.

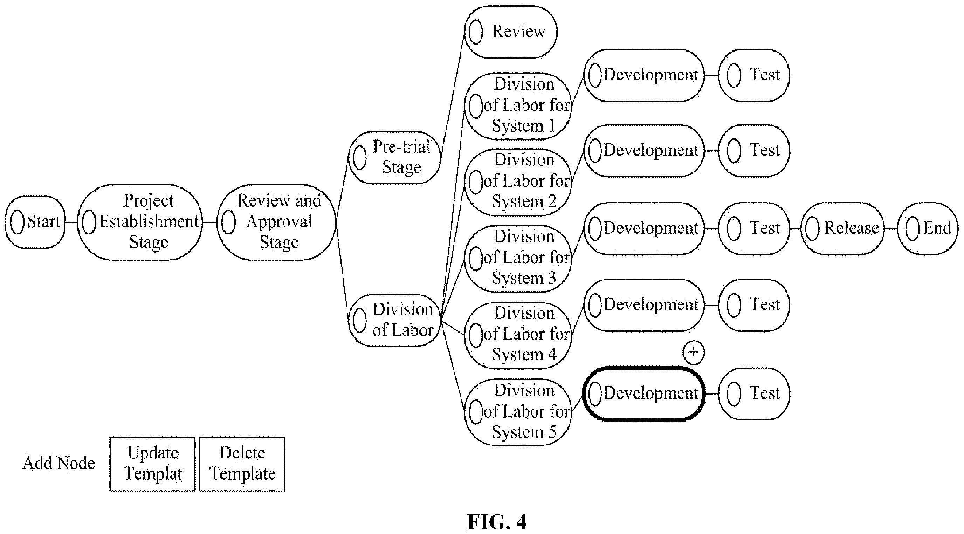

In practical applications, a project created by an enterprise is generally complex. Therefore, multiple process nodes determined for a project execution process may be shown in FIG. 4. From FIG. 4, it can be determined that multi-level process nodes represent multiple stages of the project, and that a single project stage may include multiple work tasks. By selecting a node, the project leader may use the node as a master process node (such as the "Data Development" node selected by the project leader by clicking, as shown in FIG. 4). At this time, by clicking the plus sign in the upper right corner of the node, or by clicking the "Add Node" control in the lower left corner, slave process nodes corresponding to subsequent stages of the project may be created for the node (such as the "Data Test" node in FIG. 4). Meanwhile, since the platform or the system for generating a project flow may provide template creation and reuse functions, after the execution project flow is generated for the project according to the subsequent steps of the embodiment of the present disclosure, the generated project flow may be stored, updated, and deleted as a template for projects of a certain type by clicking other controls in the lower left corner.

S220, when it is detected that a process node is triggered, a node information editing page corresponding to the process node is displayed to edit node attribute information of the process node in at least one editable item on the node information editing page.

In this embodiment, after multiple process nodes are determined for the execution process of the target project to be configured, if it is detected that a node is triggered, the node information editing page may be displayed. For example, after the project leader clicks a process node on a space configuration page of a platform or a system, the current space configuration page jumps to the node information editing page corresponding to the node. It can be understood that on the node information editing page, at least editing operations such as filling in, selecting, and modifying may be performed on the node. The information obtained after the operation is the node attribute information corresponding to the node.

It should be noted that the node attribute information includes attribute information of multiple dimensions of a node, which may not only reflect the practical work content in multiple stages of the project from multiple dimensions, but also determine the execution logic and the execution order of the work corresponding to the node.

S230, according to a preceding node identification in the node attribute information, the node dependence of at least one process node is determined; alternatively, according to an execution process of the target project to be configured, order information of at least one process node is determined, and according to the order information, the node dependence of the at least one process node is determined.

In this embodiment, at least two methods are provided to determine a node dependence of at least one process node. In a first manner, order information of at least one process node is determined in the platform or system for generating a project flow based on the execution process of the target project to be configured, and node dependences are established between process nodes according to the determined order information. It can be understood that in this manner, the node dependence between the nodes are essentially determined according to the practical work content of the project in multiple stages and the project management requirements.

In a second manner, a preceding node identification of each node is determined in the node attribute information, and a node dependence of at least one process node is determined by the identification. The preceding node may be understood as that the project execution flow does not flow to the current node associated with the node until the project task or project event represented by the preceding node is completed. It can be understood that one or more preceding nodes may exist for the current node, while the current node may also be used as a preceding node for one or more nodes in the subsequent execution process. In the platform or system that generates a project flow, the node dependence is determined by the preceding node identification in the node attribute information of the current node. The FIG. 4 continues to be used as an example for the description below.

Referring to FIG. 4, when the "To Be Released" node is used as the current node, the node's preceding node may be determined by editing the node attribute information on the node information editing page. For example, five node identifications, namely, "iPhone Operating System (iOS) Test", "Android Test", "Server Test", "Front-end Test", and "Data Test" are selected from the page and used as the preceding node identifications. Based on the above five preceding node identifications, the platform or the system may determine the node dependence between the preceding five nodes and the "To Be Released" node, that is, after the iOS test task, Android test task, server test task, front-end test task, and Data test task are all completed, the execution process of the project flows to the "To Be Released" node. Moreover, on node information editing pages corresponding to an "Online Security Review" node and an "Open Platform File Upgrade" node, the node identification of the "To Be Released" node is used as the preceding node identification of the above two nodes to determine the node dependence between the online security review task and the task to be released and the node dependence between the open platform file update task and the task to be released, that is, the project execution process does not flow to the "Online Security Review" node and the "Open Platform File Update" node until the task or event corresponding to the "To Be Released" node is executed.

For example, according to the node dependence, the preceding node identification in the node attribute information is adjusted to update the node attribute information based on an adjusted preceding node identification.

In practical applications, when the practical work content or project management requirements of the target project to be configured changes, not only the node attribute information of the related process node changes, but also a new node dependence may be generated between different process nodes. For the platform or system for generating a project flow, when the project flow is generated based on the new node dependence of the process nodes of the project, the preceding node identification in the related node attribute information needs to be modified according to the node dependence to update the node attribute information. The FIG. 4 continues to be used as an example for the description below.

Referring to FIG. 4, after a second review of the target project to-be-configured, the enterprise decides not to develop related product applications on an iOS terminal, and iOS-related branches need to be deleted from the project execution process. Based on this, "iOS Evaluation Schedule" node, "iOS Development" node, and "iOS Test" node may be deleted from the platform or system that generates a project flow. Meanwhile, in the node attribute information corresponding to the "To Be Released" node, the node identification corresponding to the "iOS Test" node in the preceding node identification of the "To Be Released" node is deleted. In this manner, the node attribute information of the project-related process nodes is updated.

S240, based on the node dependence, an execution order corresponding to the at least one process node is determined, and according to a node name in the node attribute information of the at least one process node and the node dependence, the execution project flow information of the target project to be configured is determined.

In this embodiment, after the node dependence of at least one process node of the target project to be configured is determined, the platform or system for generating a project flow determines an execution order corresponding to the at least one node. It can be understood that triggering conditions and completion conditions of tasks or events in multiple stages of the project, as well as the correlation of multiple tasks or events are determined. According to node names in node attribute information of nodes and node dependences between the nodes, execution project flow information may be generated in the form of a flowchart. Meanwhile, the project flow information is displayed on a specific page of the platform or system so that the relevant staff may monitor and manage the project on the whole and task completion in multiple stages. FIG. 3 is used as an example for the description.

Referring to FIG. 3, after the node attribute information of the nodes of the project and the node dependences between the nodes are determined, the process nodes may be connected by line segments to display the execution process of the target project to be configured from left to right. Meanwhile, an identification representing node state information is configured for each node, such as a circle in each node in the figure. Different identifications may represent different pieces of state information. A circle identification marked with a check mark indicates that a task or an event corresponding to the node is executed completely and passes the review of a related authorized user. A black circle identification indicates that a task or an event corresponding to the node is not completed and exceeds the work period pre-allocated for the task or event, which should be highlighted. A circle identification filled with slashes indicates that a task or an event of the project corresponding to the node is currently executed. A gray circle identification indicates that the project execution process does not flow to this node, that is, a task or an event of the preceding node associated with this node is not completed, and a task or an event of this node cannot be triggered.

In the practical application process, after the execution project flow information is generated for the target project to be configured, the project leader may supervise process nodes via the platform or the system. Meanwhile, executors corresponding to the process nodes may also obtain the node attribute information corresponding to the nodes via the platform or the system to clarify the docking relationship with other departments in the project, and meanwhile, execute corresponding tasks or events based on the node attribute information.

In the technical solution of this embodiment, a process node is determined according to a project execution process, and when it is detected that the process node is triggered, a node information editing page is displayed so that a user can customize the node attribute information with a higher degree of freedom. The node dependence between nodes is determined according to a preceding node identification, or the node dependence between nodes is determined based on the project execution process. In this manner, logical sorting of the project execution process is achieved. An execution order of the process nodes is determined based on the node dependence, and execution project flow information is generated, thereby facilitating efficient advancement of the project.

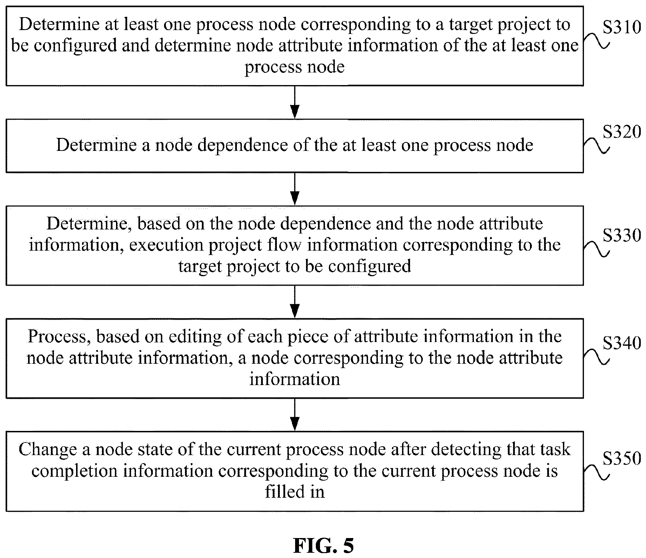

FIG. 5 is a flowchart of a method for generating a project flow according to another embodiment of the present disclosure. On the basis of the preceding embodiments, node attribute information includes attribute information of multiple dimensions of a process node. The information is edited and configured on the node editing page so that the execution process of the target project to be configured is highly customized in a visual manner, and meanwhile, a method is provided for a user to modify the project execution process. An exemplary embodiment may be referred to the technical solution of this embodiment. Technical terms identical to or corresponding to the preceding embodiments are not repeated herein.

As shown in FIG. 5, the method includes the steps described below.

S310, at least one process node corresponding to a target project to be configured is determined, and node attribute information of the at least one process node is determined.

S320, a node dependence of the at least one process node is determined.

S330, based on the node dependence and the node attribute information, execution project flow information corresponding to the target project to be configured is determined.

S340, based on editing of each piece of attribute information in the node attribute information, a node corresponding to the node attribute information is processed.

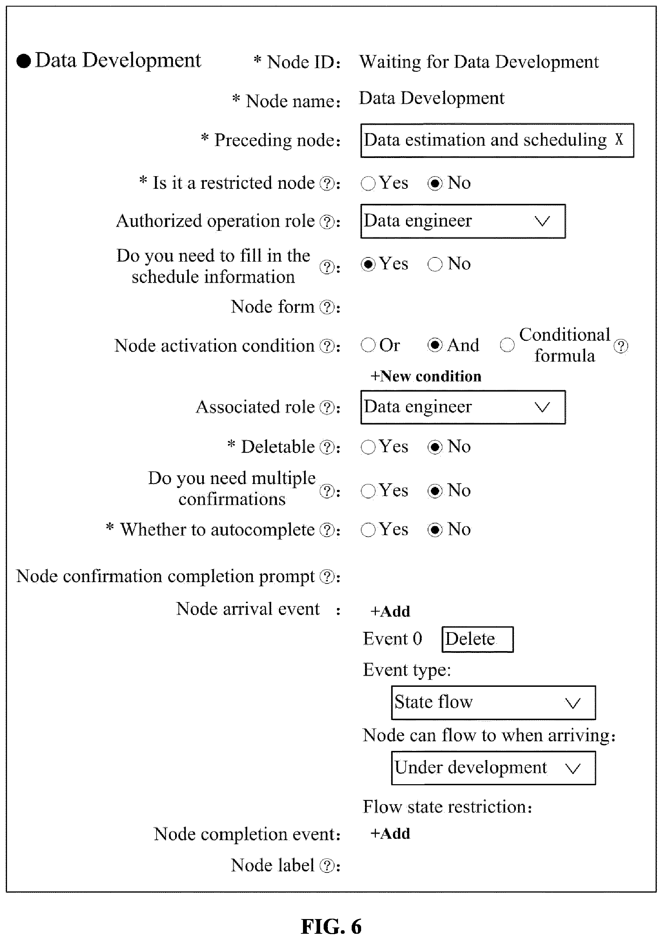

In this embodiment, the node attribute information includes attribute information of multiple dimensions of the node. For example, the node attribute information includes at least one of a node identification, a node name, a node collaboration user, node authorization information, a node execution duration, a node operation type, a node flow type, a node restriction type, a preceding node identification, and a node event. On an editing page, corresponding editable items may be deployed for pieces of the preceding information. The preceding information is described in detail below in connection with FIG. 6.

Referring to FIG. 6, the node identification refers to the ID of the process node. It can be understood that the node identification is unique for any node. Configuring the node identification for each node facilitates the platform or the system to call these nodes via an application programming interface (API) so that nodes are configured and a project flow is generated. For the "Data Development" process node, the corresponding node identification is "waiting_for_data_development". The node name reflects that an event of the project needs to be completed at this node. The node name may be a key field. For example, "Data Development" indicates that big data development related work of the project needs to be completed at this stage. Naming a stage of the project is convenient for visually displaying the project task stage corresponding to the node to a user and is also beneficial for the user to interact with the platform or the system that generates the project flow.

In this embodiment, in response to detecting that the node identification of a current process node changes, and that an upgrade operation is performed on the current process node, the current process node and a process node on which the current process node depends are deleted. For example, the project leader may modify the node identification of the current node in the platform or the system. After detecting that the node identification is modified, the platform or the system deletes the current node and the node attribute information that is edited and exists before the node identification is modified. Meanwhile, the platform or the system also deletes, according to the node dependence between the processes nodes, other nodes that have a node dependence with the current node. Similarly, the configured node attribute information of the other nodes is also deleted. This process can be understood as that when the work content of any current stage of the project is modified, the work content of other stages having a node dependence with this project stage also changes.

With continued reference to FIG. 6, in practical execution of the project, some nodes in the execution process, after completion, may need to be confirmed by multiple parties according to the project management requirements. The project task does not flow to the next node in the execution process until the nodes are confirmed by all the multiple parties. Based on this, editing of the node attribute information includes editing of the node restriction type, editing of the node flow type, and editing of the node collaboration user. For the node restriction type, "Yes" or "No" in the option of "Is it a restricted node" may be chosen; "Yes" or "No" respectively indicates that the node is a restricted node or that the node is an unrestricted node. For the node flow type, "Yes" or "No" in the option of "Do you need multiple confirmations" can be chosen; "Yes" or "No" respectively indicates that the task corresponding to the node needs multiple confirmations after completion or that the task corresponding to the node does not need multiple confirmations after completion.

For example, a node state of the current process node is changed in response to determining that a node restriction type in node attribute information of a current process node is a first type and detecting that a target operation user corresponding to the first type processes the current process node. The "Data Development" node in FIG. 6 is used as an example. The current process node is configured as a restricted type (the first type) by the option of "Is it a restricted node" in the node attribute information. At this time, after the work task of this node (Data development task) is completed, and only after the project leader (the target operation user corresponding to the first type) reviews and confirms the relevant work task can the state information of the node be changed from "under development" to "development completed", and meanwhile, the project flows to the next node in the execution process (the "Data Test" node). It should be noted that when the node restriction type is the first type and that multiple corresponding target operation users exist, for the task of this node, as long as one party does not confirm completion of the task, the project task in the execution process is not transferred.

For example, in response to determining that the node restriction type in node attribute information of a current process node is a second type and that the node collaboration user includes a collaboration user, based on the collaboration user's trigger operation on the current process node, a node state of the current process node is upgraded. The "Data Development" node in FIG. 6 is used as an example. The current process node is configured as an unrestricted type (the second type) by the option of "Is it a restricted node" in the node attribute information, and user A and user B are selected other than the project leader among the node collaboration users. At this time, after the work task (Data development task) of the node is completed, the project leader confirms the project, and either of the selected node collaboration user A or B confirms completion of the task, the state information of the node may be changed from "under development" to "development completed", and meanwhile, the project flows to the next node in the execution process (the "Data Test" node).

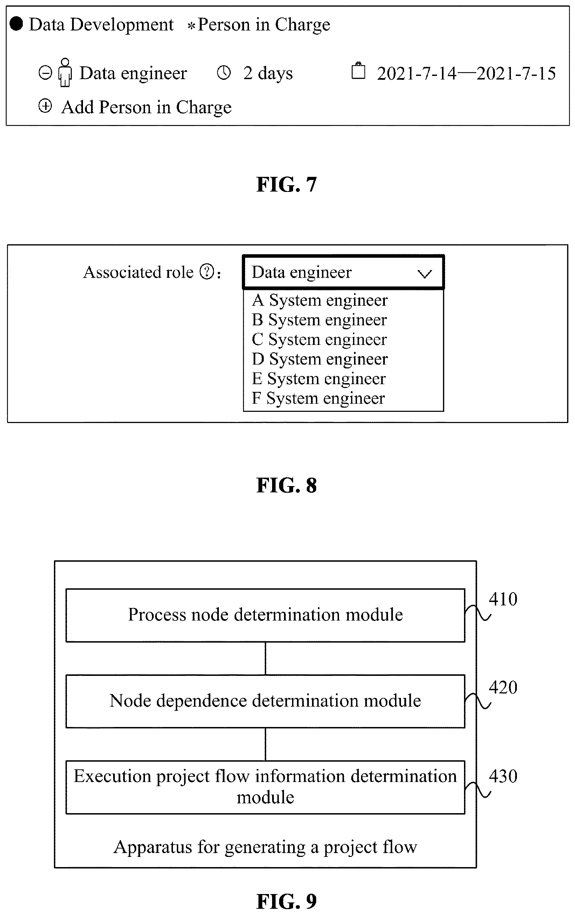

With continued reference to FIG. 6, in order to clarify the executor of the project task corresponding to the node in the node attribute information, the node authorization information also needs to be edited. For this purpose, the executor of the project task for the node may be selected from a pre-configured role set in the "authorized operation role". For the task of "Data Development", the task executor may be "Data Engineer", that is, "Data Engineer" performs work related to big data development. Meanwhile, an execution duration for the project work of the node may be configured. For this purpose, "Yes" in the option of "Do you need to fill in the scheduling information" is chosen, and a specific duration is filled in as the execution duration of the "Data Development" work. As shown in FIG. 7, a two-day execution duration for the Data engineer may be configured on the scheduling page corresponding to the node. The corresponding time period in the project duration is from July 14, 2021 to July 15, 2021. Meanwhile, the "Add Person in Charge" control may be clicked on the page to continue to add executors for the current "Data Development" node. It should be noted that when no task executor is selected for the node, the "authorized operation role" of the node is the project leader who creates the project by default. Meanwhile, the node is configured to be "Non-schedulable" by default, that is, the work execution duration does not need to be specified.

With continued reference to FIG. 6, the node operation type may also be edited in the node attribute information. For this purpose, "Yes" or "No" in the option of "Can it be deleted" may be chosen. It can be understood that the attribute of node operation type is used to determine whether the node may be deleted. Therefore, the preceding two options indicate whether the target project may not execute the task corresponding to this node. The "Associated Role" may also be edited for this node. In this embodiment, the "Associated Role" may at least determine the deletion operation on the related node, that is, when the role selected by the associated role is deleted in the platform or the system, the node associated with the selected role is also deleted in the execution process corresponding to the project.

For example, if an associated role is configured for a current process node, the current process node is deleted in response to detecting that the associated role is deleted. As shown in FIG. 8, "Data Engineer" may be selected as the associated role of the "Data Development" node among various types of roles provided by the pre-configured set of associated roles. When the platform or the system deletes the associated role "Data Engineer", the "Data Development" node (and subsequent multiple nodes involved in big data tasks) corresponding to the associated role is deleted together. Those skilled in the art should understand that the platform or the system may also provide a recovery function for the associated role and the related nodes, which is not repeated herein by the embodiment of the present disclosure.

It should be noted that after a node is edited as "Deletable", only a user with corresponding operation permission on the node may perform the delete operation. Meanwhile, the "Deletable" attribute may be edited for a node only if the node's associated role in the platform or the system is deletable. In this case, the deletion operation is reversible, that is to say, a node deleted by the project leader or a relevant user with permission by mistake may be restored by re-adding the associated role corresponding to the node.

With continued reference to FIG. 6, the preceding node identification of the current node may also be edited in the node attribute information. For example, a preceding node identification may be added to the "Node Arrival Event", and the event corresponding to the preceding node triggers the event corresponding to the current node. That is to say, the task of the current node is triggered after the task corresponding to the preceding node is completed. For example, when "Data Development" is used as the current node, the preceding node identification of "Data Development" may be edited as the identification corresponding to the "Data Estimation and Scheduling" node, that is, the execution process flows to the big data development task after the relevant staff estimate and schedule the big data task of the project. It can be understood that in addition to the function of adding the preceding node identification, the platform or the system also provides a function of deleting the preceding node identification.

While the preceding node identification is edited, the event type and the flow state information of the current node may also be edited when the project execution process reaches the current node. As shown in FIG. 6, after the big data task's estimation and scheduling event is executed, the current "Data Development" node may advance the project according to the option "Event Flow" of the event type. Meanwhile, based on the flow state information selected in the option of "Node can flow to when arriving", the node may be adaptively displayed as "under development" on the display page of the platform or the system.

With continued reference to FIG. 6, the node form of the current node may also be configured in the node attribute information. The node form is used to edit and configure a list of deliverables under the process node. Those skilled in the art should understand that the process nodes may configure deliverables according to practical needs of the project. The deliverables may be physical objects such as hardware of a product, or may be virtual objects such as a packaging file, a program code, and a data platform of components. It should be noted that when a node form is edited for the process node, the deliverable attribute information may also be configured on the form configuration page. For example, if the deliverable corresponding to a process node is a web page at the front end, the deliverable attribute information is a link corresponding to the web page. Those skilled in the art should understand that the deliverable attribute information corresponding to the node form of the process node may be configured according to the practical needs of the project, which is not specifically limited herein by the embodiment of the present disclosure.

It should be noted that when multiple nodes attribute information is edited and configured based on the node information editing page of a specific platform or system, a user may query a detailed explanation of the node attribute information under the attribute by a clicking identification such as a question mark after each piece of attribute information.

S350, a node state of the current process node is changed after detecting that task completion information corresponding to the current process node is filled in.

With continued reference to FIG. 6, the node task or event of the current node may also be edited in the node attribute information. For example, specific event information may be added in the option of "Node Completion Event" as a sign of completion of the current node. Meanwhile, the state information of the process node also undergoes an adaptive change after the added event information is completed and filled in the node attribute information. It can be understood that the process is similar to that of a node arrival event. Exemplarily, for the "Data Development" node, the completion information of the node may be that "construction of the project-related big data platform is completed". When the authorized user of this node inspects the big data and confirms that the completed information is authentic and reliable, the execution process may be advanced from the current "Data Development" node to the next node "Data Test". At this time, the node state information of the "Data Development" node changes from "under development" to "development completed".

In the technical solution of this embodiment, the node attribute information includes attribute information of multiple dimensions of a process node. The information is edited and configured on the node editing page so that the execution process of the target project to be configured is highly customized in a visual manner, and meanwhile, a method is provided for a user to modify the project execution process.

FIG. 9 is a block diagram illustrating the structure of an apparatus for generating a project flow according to an embodiment of the present disclosure. The apparatus can execute the method for generating a project flow provided by any embodiment of the present disclosure and has functional modules and beneficial effects corresponding to the execution methods. As shown in FIG. 9, the apparatus includes a process node determination module 410, a node dependence determination module 420, and an execution project flow information determination module 430.

The process node determination module 410 is configured to determine at least one process node corresponding to a target project to be configured and determine node attribute information of the at least one process node.

The node dependence determination module 420 is configured to determine a node dependence of the at least one process node.

The execution project flow information determination module 430 is configured to determine, based on the node dependence and the node attribute information, execution project flow information corresponding to the target project to be configured.

On the basis of the preceding technical solutions, the at least one process node includes a master process node and a slave process node, and the process node determination module 410 includes an execution process determination unit, a process node determination unit, and a node attribute information editing unit.

The execution process determination unit is configured to determine an execution process corresponding to the target project to be configured and determine at least one process node according to the execution process.

The process node determination unit is configured to determine at least one master process node according to the execution process. For each master process node, when it is detected that a current master process node is triggered, a slave process node corresponding to the current master process node is added, and when it is detected that the slave process node is triggered, the slave process node is used as the current master process node.

The node attribute information editing unit is configured to display a node information editing page corresponding to the process node when it is detected that a process node is triggered, so as to edit node attribute information of the process node in at least one editable item on the node information editing page.

For example, the node dependence determination module 420 is also configured to determine, according to a preceding node identification in the node attribute information, the node dependence of at least one process node; alternatively, the node dependence determination module 420 is also configured to determine, according to an execution process of the target project to be configured, order information of at least one process node, and determine, according to the order information, a node dependence of the at least one process node.

For example, the apparatus for generating a project flow also includes a preceding node identification adjustment module.

The preceding node identification adjustment module is configured to adjust, according to the node dependence, the preceding node identification in the node attribute information to update the node attribute information based on an adjusted preceding node identification.

On the basis of the preceding technical solutions, the execution project flow information determination module 430 includes a process node execution order determination unit and an execution project flow information generation unit.

The process node execution order determination unit is configured to determine, based on the node dependence, an execution order corresponding to the at least one process node.

The execution project flow information generation unit is configured to generate, according to a node name in the node attribute information of the at least one process node and the node dependence, the execution project flow information of the target project to be configured.

On the basis of the preceding technical solutions, the node attribute information includes at least one of a node identification, a node name, a node collaboration user, node authorization information, a node execution duration, a node operation type, a node flow type, a node restriction type, a preceding node identification, and a node event.

On the basis of the preceding technical solutions, the apparatus for generating a project flow also includes a process node processing module.

The process node processing module is configured to delete the current process node and a process node on which the current process node depends in response to detecting that a node identification of a current process node changes, and that an upgrade operation is performed on the current process node.

For example, the process node processing module is also configured to change a node state of the current process node in response to determining that a node restriction type in node attribute information of a current process node is a first type and detecting that a target operation user corresponding to the first type processes the current process node.

For example, the process node processing module is also configured to update, based on a trigger operation of the collaboration user on the current process node, a node state of the current process node in response to determining that the node restriction type in node attribute information of a current process node is a second type and that the node collaboration user includes a collaboration user.

For example, the process node processing module is also configured to configure an associated role for a current process node and delete the current process node in response to detecting that the associated role is deleted.

On the basis of the preceding technical solutions, the apparatus for generating a project flow also includes a node state change module.

The node state change module is configured to change a node state of a current process node after detecting that task completion information corresponding to the current process node is filled in.

In the technical solution of this embodiment, the at least one process node corresponding to a target project to be configured is determined and the node attribute information of each process node to clarify the specific work content in each process of the project is determined. The node dependence of the at least one process node is determined and, based on a node dependence and node attribute information, the execution project flow information corresponding to the target project to be configured is determined, thereby providing a standard and concise method for sorting out and planning the project and improving the convenience of constructing a corresponding project process based on a practical project. Moreover, the obtained clear and digitized project process facilitates staff to monitor and manage the project on the whole and the work in multiple stages, thereby facilitating efficient advancement of the project.

The apparatus for generating a project flow provided by embodiments of the present disclosure may execute the method for generating a project flow provided by any embodiment of the present disclosure and has functional modules and beneficial effects corresponding to the execution methods.

It is to be noted that units and modules involved in the preceding apparatus are just divided according to functional logic, and the division is not limited to this, as long as the corresponding functions can be achieved. In addition, the specific names of functional units are just intended for distinguishing and are not to limit the protection scope of embodiments of the present disclosure.

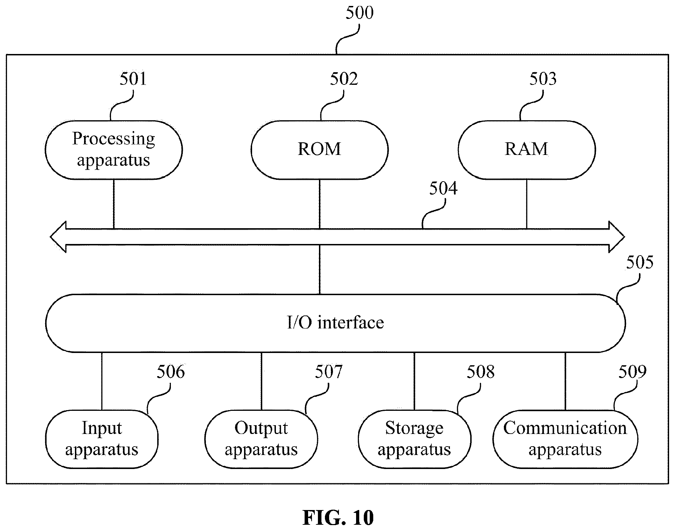

FIG. 10 is a diagram illustrating the structure of an electronic device according to an embodiment of the present disclosure. Referring to FIG. 10, the structure of an electronic device 500 (for example, a terminal device or a server in FIG. 10) suitable for implementing an embodiment of the present disclosure is illustrated. The terminal device in the embodiments of the present disclosure may include but is not limited to, a mobile terminal such as a mobile phone, a laptop, a digital broadcast receiver, a personal digital assistant (PDA), a portable android device (PAD), a portable media player (PMP), and a vehicle-mounted terminal (for example, a vehicle-mounted navigation terminal) and a fixed terminal such as a digital TV and a desktop computer. The electronic device shown in FIG. 10 is merely an example and should not impose any limitation to the function and usage scope of the embodiment of the present disclosure.

As shown in FIG. 10, the electronic device 500 may include a processing apparatus 501 (such as a central processing unit or a graphics processor). The processing apparatus 501 may perform various appropriate actions and processing according to a program stored in a read-only memory (ROM) 502 or a program loaded into a random access memory (RAM) 503 from a storage apparatus 506. The RAM 503 also stores various programs and data required for the operation of the electronic device 500. The processing apparatus 501, the ROM 502, and the RAM 503 are connected to each other through a bus 504. An input/output (I/O) interface 505 is also connected to the bus 504.

Generally, the following apparatuses may be connected to the I/O interface 505: an input apparatus 506 such as a touch screen, a touch pad, a keyboard, a mouse, a camera, a microphone, an accelerometer, and a gyroscope; an output apparatus 507 such as a liquid crystal display (LCD), a speaker, and a vibrator; a storage apparatus 508 such as a magnetic tape and a hard disk; and a communication apparatus 509. The communication apparatus 509 may allow the electronic device 500 to perform wireless or wired communication with other devices to exchange data. FIG. 10 shows the electronic device 500 having various apparatuses, but it should be understood that it is not necessary to implement or be equipped with all the shown apparatuses. The electronic device 500 may implement or be equipped with more or fewer apparatuses.

According to the embodiment of the present disclosure, the process described above with reference to the flowchart may be implemented as a computer software program. For example, this embodiment of the present disclosure includes a computer program product. The computer program product includes a computer program carried in a non-transitory computer-readable medium. The computer program includes program codes for performing the method shown in the flowchart. In such an embodiment, the computer program may be downloaded and installed from the network via the communication apparatus 509, or may be installed from the storage apparatus 506, or may be installed from the ROM 502. When the computer program is executed by the processing apparatus 501, the preceding functions defined in the methods of the embodiments of the present disclosure are performed.

The names of messages or information exchanged between multiple apparatuses in the embodiments of the present disclosure are used for illustrative purposes only and are not used to limit the scope of these messages or information.

The electronic device provided in the embodiment of the present disclosure and the method for generating a project flow provided in the preceding embodiments belong to the same concept. For technical details not described in detail in this embodiment, reference may be made to the preceding embodiments, and this embodiment has the same beneficial effects as the preceding embodiments.

The embodiment of the present disclosure provides a computer-readable storage medium storing a computer program that, when executed by a processor, implements the method for generating a project flow provided in the preceding embodiments.

It should be noted that the preceding computer-readable medium of the present disclosure may be a computer-readable signal medium, a computer-readable storage medium, or any combination of the computer-readable signal medium and the computer-readable storage medium. The computer-readable storage medium may be, but is not limited to, an electrical, magnetic, optical, electromagnetic, infrared, or semiconductor system, apparatus, or device, or any combination thereof. Concrete examples of the computer-readable storage media may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof. In the present disclosure, the computer-readable storage medium may be any tangible medium including or storing a program. The program may be used by or used in conjunction with an instruction execution system, apparatus, or device. In the present disclosure, the computer-readable signal medium may include a data signal propagated on a base band or as a part of a carrier wave. Computer-readable program codes are carried in the data signal. Such propagated data signals may take a variety of forms, including, but not limited to, electromagnetic signals, optical signals, or any suitable combination thereof. The computer-readable signal medium may also be any computer-readable medium other than a computer-readable storage medium. The computer-readable signal medium may send, propagate, or transmit a program used by or in conjunction with an instruction execution system, apparatus, or device. The program codes contained on the computer-readable medium may be transmitted on any suitable medium, including, but not limited to, a wire, an optical cable, radio frequency (RF), or any suitable combination thereof.

In some embodiments, the client and the server can communicate by using any currently known or future-developed network protocol such as HyperText Transfer Protocol (HTTP ) and can be interconnected by any form or medium of digital data communication (for example, a communication network). Examples of the communication network include a local area network (LAN), a wide area network (WAN), an interconnected network (for example, the Internet), an end-to-end network (for example, an ad hoc end-to-end network), and any currently known or future-developed network.

The preceding computer-readable medium may be included in the preceding electronic device, or may exist alone without being assembled into the electronic device.

The preceding computer-readable medium carries one or more programs. When executing the one or more programs, the electronic device performs the following steps of determining at least one process node corresponding to a target project to be configured, and determining node attribute information of the at least one process node; determining a node dependence of the at least one process node; and determining, based on the node dependence and the node attribute information, execution project flow information corresponding to the target project to be configured.

Computer program codes for performing the operations in the present disclosure may be written in one or more programming languages or a combination thereof. The preceding one or more programming languages include but are not limited to object-oriented programming languages such as Java, Smalltalk, and C++, as well as conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In the case relating to a remote computer, the remote computer may be connected to a user computer via any kind of network including a local area network (LAN) or a wide area network (WAN), or may be connected to an external computer (for example, via the Internet through an Internet service provider).

The flowcharts and block diagrams in the drawings show possible architectures, functions, and operations of the system, method, and computer program product according to the multiple embodiments of the present disclosure. In this regard, each block in the flowcharts or block diagrams may represent a module, a program segment, or part of codes that include one or more executable instructions for implementing specified logical functions. It is also to be noted that in some alternative implementations, the functions noted in the blocks may take an order different from the order noted in the drawings. For example, two sequential blocks may, in fact, be executed substantially in parallel, or sometimes executed in the reverse order, which depends on the involved functions. It is also to be noted that each block of the block diagrams and/or flowcharts and combinations of blocks in the block diagrams and/or flowcharts may be implemented by not only a specific-purpose hardware-based system that performs a specified function or action, but also a combination of specific-purpose hardware and computer instructions.

The described units involved in the embodiments of the present disclosure may be implemented by software or hardware. A name of a respective unit does not constitute a limitation to the respective unit in a certain case. For example, the first acquisition unit may also be described as "a unit for acquiring at least two Internet Protocol addresses".

The functions described herein above may be performed at least in part by one or more hardware logic components. For example, without limitation, exemplary types of hardware logic components that may be used include Field Programmable Gate Array (FPGA), Application Specific Integrated Circuit (ASIC), Application Specific Standard Product (ASSP), System on Chips (SOC), and Complex Programmable Logical device (CPLD).

In the context of the present disclosure, a machine-readable medium may be a tangible medium that may contain or store a computer program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. Concrete examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof.

According to one or more embodiments of the present disclosure, example one provides a method for generating a project flow. The method includes the steps of determining at least one process node corresponding to a target project to be configured, and determining node attribute information of the at least one process node; determining a node dependence of the at least one process node; and determining, based on the node dependence and the node attribute information, execution project flow information corresponding to the target project to be configured.

According to one or more embodiments of the present disclosure, example two provides a method for generating a project flow. The method further includes the step of, for example, determining an execution process corresponding to the target project to be configured, and determining, according to the execution process, the at least one process node.

According to one or more embodiments of the present disclosure, example three provides a method for generating a project flow. The method further includes the steps of, for example, the at least one process node including a master process node and a slave process node; determining, according to the execution process, at least one master process node ; and for each master process node, adding a slave process node corresponding to a current master process node when it is detected that the current master process node is triggered, and using the slave process node as the current master process node when it is detected that the slave process node is triggered.

According to one or more embodiments of the present disclosure, example four provides a method for generating a project flow. The method also includes the steps of, for example, displaying a node information editing page corresponding to the process node when it is detected that a process node is triggered, so as to edit node attribute information of the process node in at least one editable item on the node information editing page.

According to one or more embodiments of the present disclosure, example five provides a method for generating a project flow. The method further includes the steps of, for example, determining, according to a preceding node identification in the node attribute information, the node dependence of at least one process node; or determining, according to an execution process of the target project to be configured, order information of at least one process node, and determining, according to the order information, the node dependence of the at least one process node.

According to one or more embodiments of the present disclosure, example six provides a method for generating a project flow. The method further includes the steps of, for example, adjusting, according to the node dependence, the preceding node identification in the node attribute information to update the node attribute information based on an adjusted preceding node identification.

According to one or more embodiments of the present disclosure, example seven provides a method for generating a project flow. The method further includes the steps of, for example, determining, based on the node dependence, an execution order corresponding to the at least one process node; and generating, according to a node name in the node attribute information of the at least one process node and the node dependence, the execution project flow information of the target project to be configured.

According to one or more embodiments of the present disclosure, example eight provides a method for generating a project flow. The method further includes the following step: for example, the node attribute information includes at least one of a node identification, a node name, a node collaboration user, node authorization information, a node execution duration, a node operation type, a node flow type, a node restriction type, a preceding node identification, and a node event.

According to one or more embodiments of the present disclosure, example nine provides a method for generating a project flow. The method further includes the step of, for example, deleting the current process node and a process node on which the current process node depends in response to detecting that a node identification of a current process node changes, and that an upgrade operation is performed on the current process node.

According to one or more embodiments of the present disclosure, example ten provides a method for generating a project flow. The method further includes the step of, for example, changing a node state of the current process node in response to determining that a node restriction type in node attribute information of a current process node is a first type and detecting that a target operation user corresponding to the first type processes the current process node.

According to one or more embodiments of the present disclosure, example eleven provides a method for generating a project flow. The method further includes the step of, for example, updating, based on the collaboration user's trigger operation on the current process node, a node state of the current process node in response to determining that a node restriction type in node attribute information of a current process node is a second type and that the node collaboration user includes a collaboration user.

According to one or more embodiments of the present disclosure, example twelve provides a method for generating a project flow. The method further includes the steps of, for example, configuring an associated role for a current process node and deleting the current process node in response to detecting that the associated role is deleted.

According to one or more embodiments of the present disclosure, example thirteen provides a method for generating a project flow. The method also includes the step of, for example, changing a node state of a current process node after detecting that task completion information corresponding to the current process node is filled in.

According to one or more embodiments of the present disclosure, example fourteen provides an apparatus for generating a project flow. The apparatus includes a process node determination module, a node dependence determination module, and an execution project flow information determination module.

The process node determination module is configured to determine at least one process node corresponding to a target project to be configured and determine node attribute information of the at least one process node.

The node dependence determination module is configured to determine a node dependence of the at least one process node.

The execution project flow information determination module is configured to determine, based on the node dependence and the node attribute information, execution project flow information corresponding to the target project to be configured.

Additionally, although multiple operations are described in a particular order, it is not a must to perform these operations in this particular order or in sequential order. In a certain environment, multitasking and parallel processing may be advantageous. Similarly, although multiple implementation details are included in the preceding discussion, these should not be construed as limiting the scope of the present disclosure. Some features described in the context of separate embodiments may be implemented in combination in a single embodiment. Rather, features described in the context of a single embodiment may be implemented in multiple embodiments individually or in any suitable subcombination.

## Claims

1. A method for generating a project flow, comprising:
determining at least one process node corresponding to a target project to be configured, and
determining node attribute information of the at least one process node;
determining a node dependence of the at least one process node; and
determining, based on the node dependence and the node attribute information, execution project flow information corresponding to the target project to be configured.

2. The method of claim 1, wherein determining the at least one process node corresponding to the target project to be configured comprises:
determining an execution process corresponding to the target project to be configured, and
determining the at least one process node according to the execution process.

3. The method of claim 2, wherein the at least one process node comprises a master process node and a slave process node, and determining the at least one process node according to the execution process comprises:
determining at least one master process node according to the execution process; and
for each master process node of the at least one master process node, adding a slave process node corresponding to a current master process node of the at least one master process node in response to detecting that the current master process node is triggered, and using the slave process node as the current master process node in response to detecting that the slave process node is triggered.

4. The method of claim 1, wherein determining the node attribute information of the at least one process node comprises:
in response to detecting that a process node of the at least one process node is triggered, displaying a node information editing page corresponding to the process node to edit node attribute information of the process node in at least one editable item on the node information editing page.

5. The method of claim 1, wherein determining the node dependence of the at least one process node comprises:
determining, according to a preceding node identification in the node attribute information, the node dependence of at least one process node; or
determining, according to an execution process of the target project to be configured, order information of at least one process, and determining, according to the order information, the node dependence of the at least one process node.

6. The method of claim 5, wherein after determining, according to the execution process of the target project to be configured, the order information of the at least one process node, and determining, according to the order information, the node dependence of the at least one process node, the method further comprises:
adjusting, according to the node dependence, the preceding node identification in the node attribute information to update the node attribute information based on an adjusted preceding node identification.

7. The method of claim 1, wherein determining, based on the node dependence and node attribute information, the execution project flow information corresponding to the target project to be configured, comprises:
determining, based on the node dependence, an execution order corresponding to the at least one process node; and
generating, according to a node name in the node attribute information of the at least one process node and the node dependence, the execution project flow information of the target project to be configured.

8. The method of any one of claims 1 to 4, wherein the node attribute information comprises at least one of a node identification, a node name, a node collaboration user, node authorization information, a node execution duration, a node operation type, a node flow type, a node restriction type, a preceding node identification, and a node event.

9. The method of claim 8, further comprising:
in response to detecting that a node identification of a current process node changes, and that an upgrade operation is performed on the current process node, deleting the current process node and a process node on which the current process node depends.

10. The method of claim 8, further comprising:
in response to determining that a node restriction type in node attribute information of a current process node is a first type and detecting that a target operation user corresponding to the first type processes the current process node, changing a node state of the current process node.

11. The method of claim 8, further comprising:
in response to determining that a node restriction type in node attribute information of a current process node is a second type and that the node collaboration user comprises a collaboration user, updating, based on a trigger operation of the collaboration user on the current process node, a node state of the current process node.

12. The method of claim 8, further comprising:
configuring an associated role for a current process node, and in response to detecting that the associated role is deleted, deleting the current process node.

13. The method of claim 1, further comprising:
changing a node state of a current process node after detecting that task completion information corresponding to the current process node is filled in.

14. An apparatus for generating a project flow, comprising:
a process node determination module, which is configured to determine at least one process node of a plurality of process nodes corresponding to a target project to be configured and determine node attribute information of the at least one process node;
a node dependence determination module, which is configured to determine a node dependence of the at least one process node; and
an execution project flow information determination module, which is configured to determine, based on a node dependence and node attribute information, execution project flow information corresponding to the target project to be configured.

15. An electronic device, comprising:
one or more processors; and
a storage apparatus, which is configured to store one or more programs;
wherein when executed by the one or more processors, the one or more programs cause the one or more processors to perform the method for generating a project flow of any one of claims 1 to 13.

16. A storage medium containing computer-executable instructions that, when executed by a computer processor, implement the method for generating a project flow of any one of claims 1 to 13.
